# FASCICULE DE BREVET EUROPEEN

(11) **EP 3 530 637 B1**
(45) Date de publication et mention de la délivrance du brevet: **22.04.2020**
(21) Numéro de dépôt: 19156265.1
(22) Date de dépôt: 08.02.2019
(51) Int. Cl.: C04B 41/89, F16D 69/02

(54) **PROCÉDÉ DE PROTECTION CONTRE L'OXYDATION D'UNE PIÈCE EN MATÉRIAU COMPOSITE**
VERFAHREN ZUM SCHUTZ GEGEN OXIDATION EINES VERBUNDWERKSTÜCKS
METHOD FOR PROTECTING AGAINST OXIDATION OF A PART MADE FROM COMPOSITE MATERIAL

(30) Priorité: 23.02.2018 FR 1851604
(43) Date de publication de la demande: 28.08.2019
(73) Titulaire: Safran Landing Systems, 78140 Vélizy-Villacoublay (FR)
(72) Inventeur: SNIEZEWSKI, Julien, 69420 LES HAIES (FR); CARO, Vincent, 92200 NEUILLY-SUR-SEINE (FR); NICOLAUS, Nathalie, 69008 LYON (FR)
(74) Mandataire: Cabinet Beau de Loménie

(56) Documents cités:
- EP-A1- 2 930 162
- FR-A1- 2 889 186

## Description

L'invention concerne la protection contre l'oxydation de pièces en matériau composite contenant du carbone, c'est-à-dire en un matériau comprenant un renfort fibreux densifié par une matrice et dans lequel le renfort fibreux et/ou la matrice et/ou un revêtement d'interphase entre fibres du renfort et matrice est en carbone. Un domaine particulier d'application de l'invention est la protection contre l'oxydation de pièces en matériau composite carbone/carbone (C/C), notamment de disques de freins en composite C/C, et en particulier de disques de freins d'avions.

### Arrière-plan de l'invention

En milieu oxydant, la capacité des pièces en matériau composite contenant du carbone à conserver de bonnes propriétés mécaniques à des températures élevées est conditionnée par la présence d'une protection efficace contre l'oxydation du carbone. En effet, après son élaboration, le matériau composite présente habituellement une porosité interne résiduelle qui offre au milieu ambiant un accès jusqu'au cœur du matériau.

Pour conférer cette protection contre l'oxydation il est connu d'utiliser des systèmes internes à base de phosphate(s) métallique(s) qui sont mis en place par imprégnation dans les porosités résiduelles des pièces en matériau composite par une composition sous forme de solution aqueuse. Afin d'étendre le domaine de protection vers les températures plus élevées, des revêtements externes peuvent être employés.

A titre d'exemple, le document US 2007/0026153 décrit un procédé pour la protection de pièces en matériau composite contenant du carbone, notamment des disques de frein en matériau composite C/C. Dans une première étape du procédé, une protection interne est mise en place par imprégnation par une solution aqueuse de phosphate métallique, tel que du phosphate mono-aluminique, et traitement thermique à environ 700°C sous azote (N₂). Ensuite, un revêtement externe est formé par application d'une composition liquide contenant, en milieu aqueux, de la silice colloïdale SiO₂, une poudre de verre borosilicaté de type « Pyrex® » et de la poudre de diborure de titane TiB₂. En service en milieu oxydant, TiB₂ s'oxyde en formant B₂O₃, assurant la régénération de B₂O₃ et la conservation d'une phase de verre borosilicaté ayant un pouvoir cicatrisant par passage à l'état pâteux à partir de 600°C.

Toutefois, la durée de vie de la protection est relativement limitée lors d'expositions répétées à un environnement humide du fait de la disparition de B₂O₃ et de la consommation de TiB₂. Il serait aussi souhaitable d'améliorer la protection conférée par la solution selon US 2007/0026153 lors de sollicitations à très haute température.

### Objet et résumé de l'invention

L'invention vise, selon un premier aspect, un procédé de protection contre l'oxydation d'une pièce en matériau composite comprenant du carbone, le procédé comportant au moins :
- l'application sur une surface externe de la pièce d'une première composition de revêtement sous forme de suspension aqueuse, la première composition de revêtement comportant :
   - un phosphate métallique,
   - une poudre d'un constituant comportant du titane, et
   - une poudre de B₄C,
- un premier traitement thermique de la première composition de revêtement appliquée afin d'obtenir un premier revêtement sur la surface externe de la pièce,
- l'application sur le premier revêtement d'une deuxième composition de revêtement comportant :
   - une suspension aqueuse de silice colloïdale,
   - une poudre de verre borosilicate, et
   - une poudre de TiB₂, et
- un deuxième traitement thermique de la deuxième composition de revêtement appliquée afin d'obtenir un deuxième revêtement sur le premier revêtement.

Afin d'améliorer les performances de la composition divulguée dans le document US 2007/0026153, une première solution évaluée par les inventeurs a été d'augmenter l'épaisseur du revêtement selon ce document. Pour cela, une deuxième couche de la même composition a été appliquée. Cette augmentation d'épaisseur s'est traduite par une diminution de l'adhérence pour le revêtement bi-couches obtenu. Cette solution n'a donc pas permis d'améliorer les performances anti-oxydation.

L'invention réside dans le fait d'utiliser la première composition de revêtement décrite plus haut pour réaliser un premier revêtement constituant la sous-couche d'accrochage pour la composition divulguée dans le document US 2007/0026153 qui correspond à la deuxième composition de revêtement décrite plus haut.

En choisissant spécifiquement de combiner la première composition de revêtement à la deuxième composition de revêtement dans l'ordre indiqué dans l'invention, on obtient un revêtement d'épaisseur augmentée présentant une bonne adhérence et conférant une excellente résistance à l'oxydation en milieu humide et à très haute température. Les performances anti-oxydation obtenues sont en particulier significativement améliorées par rapport à celles obtenues à l'aide de la solution selon US 2007/0026153 ou par rapport à d'autres revêtements ayant une épaisseur augmentée.

Dans un exemple de réalisation, le constituant comportant du titane est le titane métal.

Dans un exemple de réalisation, le phosphate métallique est un phosphate d'aluminium.

Dans un exemple de réalisation, la première composition de revêtement comporte avant son application :
- le phosphate métallique en une teneur massique comprise entre 27 % et 36 %,
- la poudre du constituant comportant du titane en une teneur massique comprise entre 8 % et 18 %, et
- la poudre de B₄C en une teneur massique comprise entre 11,5 % et 21 %.

Dans un exemple de réalisation, une première température de traitement comprise entre 330°C et 740°C est imposée durant le premier traitement thermique.

Dans un exemple de réalisation, la suspension aqueuse de silice colloïdale est basique.

Le fait d'utiliser une suspension basique permet avantageusement d'améliorer davantage encore l'adhérence du deuxième revêtement au premier revêtement à base de phosphate métallique qui a un caractère acide.

Dans un exemple de réalisation, la deuxième composition de revêtement comporte avant son application :
- la suspension aqueuse de silice colloïdale en une teneur massique comprise entre 25 % et 50 %, avec une teneur massique en silice dans cette suspension comprise entre 20% et 50%,
- la poudre de verre borosilicate en une teneur massique comprise entre 5 % et 20 %, et
- la poudre de TiB₂ en une teneur massique comprise entre 30 % et 60 %, et
- le complément éventuel étant de l'eau.

Dans un exemple de réalisation, une deuxième température de traitement comprise entre 600°C et 800°C est imposée durant le deuxième traitement thermique. La deuxième température de traitement peut par exemple être comprise entre 650°C et 740°C.

Dans un exemple de réalisation, au moins une couche de protection interne est formée, avant application de la première composition de revêtement, par imprégnation d'au moins une partie de la pièce en matériau composite par une composition d'imprégnation comportant un phosphate métallique.

Dans un exemple de réalisation, la pièce est une pièce de friction. En particulier, la pièce de friction peut être en matériau composite carbone/carbone.

### Brève description des dessins

D'autres caractéristiques et avantages de l'invention ressortiront de la description suivante, donnée à titre non limitatif, en référence aux dessins annexés, sur lesquels :
- la figure 1 est un ordinogramme montrant différentes étapes successives d'un exemple de procédé selon l'invention, et
- les figures 2 à 5 montrent des courbes illustrant la variation de masse en fonction de durées d'oxydation pour des échantillons en matériau composite C/C munis de différentes protections contre l'oxydation.

### Description détaillée de modes de réalisation

Dans la description qui suit, on envisage la protection contre l'oxydation de pièces en matériau composite C/C, plus particulièrement de disques de freins, comme des disques de freins aéronautiques. Plus généralement, l'invention est applicable à la protection contre l'oxydation de toutes pièces en matériau composite contenant du carbone.

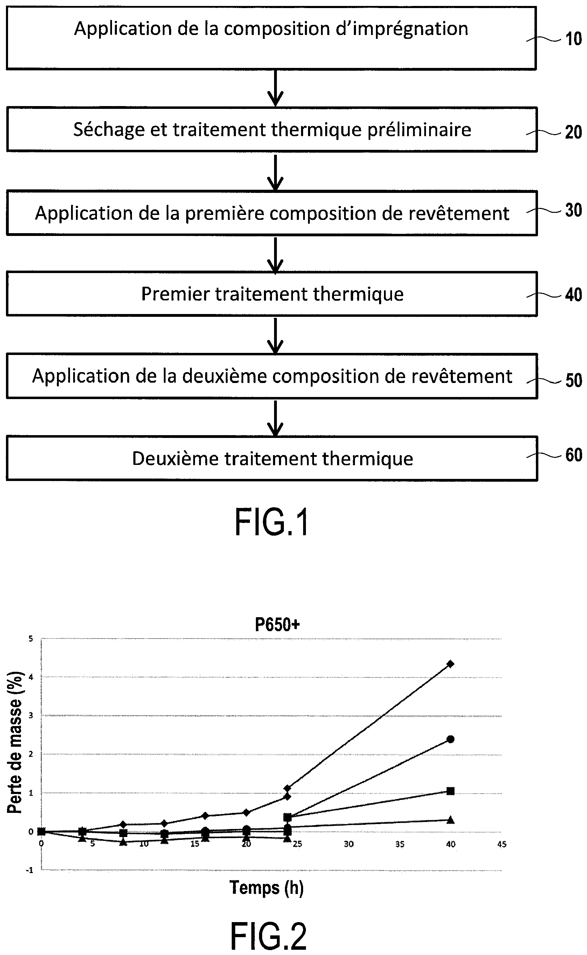

Selon le mode particulier de mise en œuvre du procédé de la figure 1, une première phase consiste à former au sein de la porosité accessible de la pièce, ou d'une partie de la pièce à protéger, une protection interne comprenant au moins un phosphate métallique apte notamment à apporter une protection contre l'oxydation du carbone.

On peut procéder comme décrit dans le document US 5 853 821. Une première étape consiste à déposer un agent mouillant au sein de la porosité accessible du matériau composite. On utilise à cet effet une solution aqueuse d'un agent mouillant tel que par exemple le produit commercialisé par la société allemande Sasol Gmbh sous la dénomination "Marlophen NP9". Après imprégnation du matériau composite par cette solution d'agent mouillant et séchage, une composition d'imprégnation sous forme d'une solution aqueuse contenant un phosphate métallique est appliquée sur l'intégralité de la surface extérieure de la pièce ou, de façon sélective, sur une partie de la surface extérieure de la pièce, par exemple au pinceau ou par projection (i.e. pulvérisation au pistolet) (étape 10). On utilise par exemple une solution aqueuse d'hydrogéno-phosphate d'aluminium Al(H₂PO₄)₃. Le phosphate métallique peut encore être un phosphate de zinc, ayant par exemple la formule chimique suivante : Zn₃(PO₄)₂.xH₂O, un phosphate de manganèse, ayant par exemple la formule chimique suivante : Mn(H₂PO₄)₂.2H₂O ou encore un phosphate de magnésium ayant par exemple la formule chimique suivante : Mg₃(PO₄)₂.8H₂O.

L'agent mouillant présent sur la surface des pores accessibles du matériau composite facilite la pénétration de la composition d'imprégnation au sein de la porosité accessible du matériau composite. Un séchage puis un traitement thermique préliminaire (étape 20) sont ensuite réalisés afin de limiter l'accès de l'oxygène de l'air à la surface des pores grâce à une protection interne en phosphate métallique.

Le traitement thermique préliminaire est réalisé en élevant la température jusqu'à une température comprise entre 200°C et 740°C, par exemple comprise entre 650°C et 740°C, par exemple d'environ 700°C. Cette température peut être imposée pendant une ou plusieurs heures.

Le traitement thermique préliminaire peut être réalisé sous atmosphère non oxydante, par exemple sous azote (N₂).

On forme ensuite les premier et deuxième revêtements sur la surface de la pièce en matériau composite. La formation de ces revêtements va être décrite ci-dessous.

Le premier revêtement est tout d'abord formé à partir de la première composition de revêtement.

La première composition de revêtement est appliquée par exemple au pinceau ou par projection sur la surface extérieure de la pièce ou sur une partie de cette surface extérieure, de préférence aux mêmes emplacements que la composition d'imprégnation (étape 30).

Dans le cas de disques de frein en matériau composite à base de carbone, l'application de la composition d'imprégnation et de la première composition de revêtement peut être limitée aux parties de surface extérieure non frottantes, la surface annulaire frottante d'un disque d'extrémité d'un ensemble de disques stators et rotors ou les surfaces frottantes opposées des disques situés entre les disques d'extrémité étant alors non-imprégnées pour éviter une altération des propriétés tribologiques.

Des exemples de premières compositions de revêtement utilisables dans le cadre de la présente invention sont décrits dans le document US 2015/0291805.

Comme indiqué plus haut, la première composition de revêtement comporte :
- un phosphate métallique,
- une poudre d'un constituant comportant du titane, et
- une poudre de B₄C.

Le phosphate métallique de la première composition de revêtement peut comporter un phosphate d'aluminium, par exemple de l'hydrogéno-phosphate d'aluminium Al(H₂PO₄)₃. Un tel composé est commercialement disponible en solution aqueuse à 48%-50 % en masse. De la même manière que plus haut, on peut utiliser un phosphate de zinc, de manganèse ou de magnésium en tant que phosphate métallique de la première composition de revêtement.

Le constituant comportant du titane peut être choisi parmi : le titane métal (Ti), le diborure de titane (TiB₂), le carbure de titane (TiC), le dioxyde de titane (TiO₂), et leurs mélanges.

En particulier, la première composition de revêtement peut comporter une poudre de titane métal et/ou une poudre de diborure de titane. En particulier, le constituant comportant du titane peut être le titane métal.

La poudre du constituant comportant du titane peut être sous la forme de particules ayant une taille moyenne inférieure ou égale à 150 µm. Sauf mention contraire, par « taille moyenne », on désigne la dimension donnée par la distribution granulométrique statistique à la moitié de la population, dite D50.

La poudre de carbure de bore B₄C peut être sous forme de particules ayant une taille moyenne inférieure ou égale à 30 µm, par exemple inférieure ou égale à 7,5 µm.

La première composition de revêtement peut, en outre, comporter un agent organique dispersant. L'agent organique dispersant permet avantageusement d'améliorer davantage encore l'adhérence du premier revêtement à la pièce sous-jacente.

L'agent organique dispersant peut être un agent organique dispersant, soluble dans l'eau et non ionique, de type acide gras oxyéthyléné, alcool gras oxyéthyléné, alkyl-phénol oxyéthyléné ou ester poly-ol supérieur. L'agent organique dispersant peut encore être un polyol acétylénique alcoxylé par exemple commercialisé sous la dénomination « Surfynol® » par la société des Etats-Unis d'Amérique Evonik. On peut encore utiliser comme agent organique dispersant des produits commercialisés sous la dénomination « Levenol® » par la société KAO Corporation ou « Marlophen NP9 » par la société Sasol Gmbh.

La première composition de revêtement peut, en outre, comporter une charge réfractaire. La charge réfractaire peut être présente, dans la première composition de revêtement avant son application, en une teneur massique inférieure ou égale à 5 %.

La charge réfractaire peut comporter un ou plusieurs oxydes, nitrures ou carbures réfractaires (autres que B₄C). La charge réfractaire peut comporter un ou plusieurs composés céramiques. La charge réfractaire peut être sous forme de particules ayant une taille moyenne inférieure ou égale à 150 µm.

Selon un exemple, la première composition de revêtement peut comporter avant son application :
- le phosphate métallique en une teneur massique comprise entre 27 % et 36 %,
- la poudre de B₄C en une teneur massique comprise entre 11,5 % et 21 %,
- la poudre du constituant comportant du titane en une teneur massique comprise entre 8 % et 18 %,
- l'agent organique dispersant, tel qu'un polyol acétylénique alcoxylé, en une teneur massique comprise entre 0,1 % et 1,5 %,
- de l'eau en une teneur massique comprise entre 33 % et 50 %, et
- optionnellement la charge réfractaire en une teneur massique inférieure ou égale à 5%.

Selon un exemple, la première composition de revêtement peut, avant son application, être constituée essentiellement par, c'est-à-dire pour au moins 90 % en masse, au moins un phosphate métallique, une poudre de titane métal, une poudre de carbure de bore B₄C, un agent organique dispersant et de l'eau.

Une fois la première composition de revêtement appliquée, on réalise ensuite un premier traitement thermique afin d'obtenir le premier revêtement (étape 40). On impose durant le premier traitement thermique une première température de traitement.

Durant le premier traitement thermique, la première température de traitement peut être suffisamment élevée afin d'obtenir dans le premier revêtement une association d'au moins une phase de phosphate métallique cristallin et d'au moins une phase de phosphate métallique amorphe. La première température de traitement peut rester suffisamment faible pour éviter de cristalliser l'intégralité du phosphate métallique et, par conséquent, conserver une phase de phosphate métallique amorphe dans le premier revêtement formé.

La proportion de phosphate métallique sous forme amorphe obtenu dans le premier revêtement peut dépendre de la première température de traitement et de la durée d'application de celle-ci. Par exemple, une augmentation de la durée d'application de la première température de traitement peut conduire à un abaissement de la proportion de phosphate métallique sous forme amorphe dans le premier revêtement.

Le premier revêtement obtenu peut être tel que le rapport [masse de phosphate métallique sous forme amorphe dans le premier revêtement]/[masse de phosphate métallique sous forme amorphe dans le premier revêtement+masse de phosphate métallique sous forme cristalline dans le premier revêtement] soit supérieur ou égal à 0,1, par exemple à 0,2. En particulier, ce rapport peut être compris entre 0,1 et 0,7, par exemple entre 0,2 et 0,5.

La détection des phases cristalline et amorphe de phosphate métallique peut être réalisée par spectroscopie RMN (1D et 2D) des noyaux solides tels que 31P et 27Al.).

La première température de traitement peut être comprise entre 330°C et 740°C, par exemple entre 650°C et 740°C. De telles valeurs de température permettent en particulier d'obtenir un premier revêtement comportant une première phase dans laquelle le phosphate métallique est sous forme cristalline et une deuxième phase dans laquelle le phosphate métallique est sous forme amorphe.

Durant le premier traitement thermique, la première température de traitement peut être imposée pendant une durée supérieure ou égale à 1 heure, par exemple comprise entre 1 heure et 15 heures.

Le premier traitement thermique peut être réalisé sous atmosphère oxydante, par exemple sous air. En variante, le premier traitement thermique peut être réalisé sous atmosphère inerte, par exemple sous azote.

La quantité de première composition de revêtement appliquée peut être choisie pour obtenir un premier revêtement ayant une épaisseur comprise entre 40 µm et 80 µm. On peut typiquement appliquer une quantité de première composition de revêtement, mesurée avant le premier traitement thermique, comprise entre 16 mg/cm² et 23 mg/cm².

On vient de décrire la formation du premier revêtement sur la surface de la pièce en matériau composite. On réalise ensuite un deuxième revêtement sur ce premier revêtement.

Le deuxième revêtement est formé à partir de la deuxième composition de revêtement, comme il va à présent être décrit.

La deuxième composition de revêtement est appliquée par exemple au pinceau ou par projection sur le premier revêtement précédemment formé (étape 50). La deuxième composition de revêtement est appliquée au contact du premier revêtement.

Des exemples de deuxièmes compositions de revêtement utilisables dans le cadre de la présente invention sont décrits dans le document US 2007/0026153.

Comme indiqué plus haut, la deuxième composition de revêtement comporte :
- une suspension aqueuse de silice colloïdale,
- une poudre de verre borosilicate, et
- une poudre de TiB₂.

Les poudres de verre borosilicate et de TiB₂ sont dispersées dans la suspension aqueuse de silice colloïdale.

La taille moyenne de particules de silice de la suspension est inférieure ou égale à 200 nm, par exemple comprise entre 5 nm et 100 nm, par exemple encore comprise entre 5 nm et 40 nm.

Le verre borosilicate comprend de la silice et un oxyde de bore B₂O₃. La somme de la teneur massique en silice et de la teneur massique en oxyde de bore B₂O₃ dans le verre borosilicate peut être supérieure ou égale à 80%, par exemple à 90%.

A titre d'exemple de verre borosilicate, on peut utiliser une poudre de verre « Pyrex® », de la société des Etats-Unis d'Amérique Corning ou fournie par la société britannique Barloword Scientific (anciennement Bibby Sterilin) lequel verre a sensiblement la composition suivante (en pourcentages massiques) :
- SiO₂ : 80,60%,
- B₂O₃ :12,60%,
- Na₂O₃ : 4,2%,
- Al₂O₃ : 2,25%,
- Cl : 0,1%,
- CaO : 0,1%,
- MgO : 0,05%,
- Fe₂O₃ : 0,05%.

D'autres verres peuvent être utilisés tels que des verres borosilicates de référence 823-01 à -05 de la société des Etats-Unis d'Amérique Ferro, ou les verres commercialisés par la société allemande Schott AG sous la dénomination « Duran » (par exemple sous la référence « 8330 »), « Suprax » ou « Borofloat 40 ».

La suspension aqueuse de silice colloïdale peut être basique. Le caractère basique peut être conféré par un additif, avantageusement un stabilisant de la suspension colloïdale tel que de l'ammoniac NH₃ ou de l'oxyde de sodium Na₂O.

La deuxième composition de revêtement peut comporter avant son application :
- la suspension aqueuse de silice colloïdale en une teneur massique comprise entre 25 % et 50 %, avec une teneur massique en silice dans cette suspension comprise entre 20% et 50%,
- la poudre de verre borosilicate en une teneur massique comprise entre 5 % et 20 %,
- la poudre de TiB₂ en une teneur massique comprise entre 30 % et 60 %, et
- le complément éventuel étant de l'eau.

En particulier, la suspension aqueuse de silice colloïdale peut être présente dans la deuxième composition de revêtement avant son application en une teneur massique comprise entre 30% et 40%.

En particulier, la poudre de verre borosilicate peut être présente dans la deuxième composition de revêtement avant son application en une teneur massique comprise entre 10% et 15%.

En particulier, la poudre de TiB₂ peut être présente dans la deuxième composition de revêtement avant son application en une teneur massique comprise entre 35% et 50%.

Une fois la deuxième composition de revêtement appliquée, on réalise ensuite un deuxième traitement thermique afin d'obtenir le deuxième revêtement sur le premier revêtement (étape 60). Le deuxième revêtement formé est au contact du premier revêtement. On impose durant le deuxième traitement thermique une deuxième température de traitement.

La deuxième température de traitement imposée durant le deuxième traitement thermique peut être comprise entre 600°C et 800°C, par exemple entre 650°C et 740°C.

Durant le deuxième traitement thermique, la deuxième température de traitement peut être imposée pendant une durée supérieure ou égale à 3 heures, par exemple comprise entre 3 heures et 4 heures. En variante, la deuxième température de traitement peut être imposée pendant une durée inférieure ou égale à 10 minutes, par exemple comprise entre 1 minute et 10 minutes.

Le deuxième traitement thermique peut être réalisé sous atmosphère inerte, par exemple sous azote.

La quantité de deuxième composition de revêtement appliquée peut être choisie pour obtenir un deuxième revêtement ayant une épaisseur comprise entre 30 µm et 70 µm. On peut typiquement appliquer une quantité de deuxième composition de revêtement, mesurée avant le deuxième traitement thermique, comprise entre 14 mg/cm² et 21 mg/cm².

### Exemple

Des essais ont été réalisés par les inventeurs afin de démontrer l'avantage conféré par l'invention en termes de protection contre l'oxydation.

Durant ces essais, des pièces en matériau composite C/C ayant une densité comprise entre 1,65 g/cm³ et 1,9 g/cm³ environ et une porosité résiduelle volumique allant de 6 à 18% environ ont été utilisées. Ces pièces ont été munies de différentes protections anti-oxydation.

Dans les essais qui suivent, l'application de toutes les protections anti-oxydation a été précédée des étapes préliminaires suivantes :
- imprégnation par une solution aqueuse de "Marlophen NP 9" ou Levenol C201-B et séchage,
- application d'une solution aqueuse de phosphate mono-aluminique à 50 % en masse d'eau au pinceau ou par projection (i.e. pulvérisation au pistolet) robotisée,
- traitement thermique sous atmosphère d'azote (N₂) par élévation progressive de la température jusqu'à 700°C et maintien à cette température pendant 1 heure minimum.

Afin d'évaluer les performances anti-oxydation des protections testées, différents protocoles d'oxydation ont été mis en œuvre qui sont détaillés ci-dessous :
- P650+ : exposition à 650°C sous air pendant 4 h, répétée 6 fois avec retour à la température ambiante après chaque exposition, puis lessivage dans l'eau pendant 24 heures à 20°C, puis exposition à 650°C sous air pendant 16 h,
- P850+ : exposition à 850°C sous air pendant 30 min, répétée 6 fois avec retour à la température ambiante après chaque exposition, puis lessivage dans l'eau pendant 24 heures à 20°C, puis exposition à 850°C sous air pendant 3h,
- P1200+ : exposition à 650°C pendant 4 h, retour à température ambiante, puis exposition à 1 200°C pendant 15 min, retour à température ambiante, puis deux expositions à 650°C pendant 4 h avec retour intermédiaire à température ambiante, retour à température ambiante, puis exposition à 1 200°C pendant 15 min, retour à température ambiante, puis exposition à 650°C pendant 8 h,
- P1400+ : exposition à 650°C pendant 4 h, retour à température ambiante, puis exposition à 1400°C pendant 10 min, retour à température ambiante, puis deux fois à 650°C pendant 4 h avec retour intermédiaire à température ambiante, retour à température ambiante, puis exposition à 1 400°C pendant 10 min, retour à température ambiante, puis exposition à 650°C pendant 8 h.

Le lessivage dans l'eau mis en œuvre consistait en la succession d'étapes suivantes :
- immersion des pièces revêtues dans de l'eau déminéralisée à 20°C pendant 24 h, et
- séchage des éprouvettes à 90°C pendant 4 h.

### Protection de référence 1 (hors invention)

Une première protection de référence (« protection de référence 1 ») a été réalisée en appliquant sur la pièce en composite C/C une suspension aqueuse comportant :
- une solution aqueuse à 50% massique en monophosphate d'aluminium en une teneur massique égale à 67%,
- une poudre de titane métal en une teneur massique égale à 11%,
- une poudre de B₄C en une teneur massique égale à 16,3%,
- de l'eau en une teneur massique égale à 4,7%, et
- 1% de Surfynol®.

Un traitement thermique de la composition appliquée a été effectué à une température de 660°C pendant une durée de 1 heure sous atmosphère d'azote afin d'obtenir le revêtement.

Une seule couche de la composition a été appliquée pour constituer la protection de référence 1.

Les quantités de composition déposées pour la protection de référence 1 avant et après le traitement thermique sont indiquées dans le tableau 1 ci-dessous pour chacun des protocoles d'essais réalisés. Ces quantités de composition sont indiquées par unité de surface.

**Tableau 1**

| | **Protection de référence 1 « ● »** | |
|---|---|---|
| Protocoles d'essais | Quantité de composition liquide déposée avant traitement thermique | Quantité de composition déposée après traitement thermique |
| P650+ | 22,7mg/cm² | **12,25mg/cm²** |
| P850+ | 17,2mg/cm² | **9,3mg/cm²** |
| P1200+ | 21,7mg/cm² | **11,7mg/cm²** |
| P1400+ | 19,7mg/cm² | **10,6mg/cm²** |

Les revêtements obtenus pour la protection de référence 1 avaient une épaisseur d'environ 60 µm.

### Protection de référence 2 (hors invention)

Une deuxième protection de référence (« protection de référence 2 ») a été réalisée en appliquant sur une pièce en composite C/C la composition suivante comportant :
- une suspension aqueuse de silice colloïdale en une teneur massique égale à 38%, la teneur massique en silice dans cette suspension était de 30%,
- une poudre de verre borosilicate « Pyrex® » en une teneur massique égale à 13%, et
- une poudre de TiB₂ en une teneur massique égale à 49%.

Le verre « Pyrex® » utilisé était fourni par la société des Etats-Unis d'Amérique Corning et présentait sensiblement la composition suivante (en pourcentages massiques) :
- SiO₂ : 80,60%,
- B₂O₃ : 12,60%,
- Na₂O₃ : 4,2%,
- Al₂O₃ : 2,25%,
- Cl : 0,1%,
- CaO : 0,1%,
- MgO : 0,05%,
- Fe₂O₃ : 0,05%.

Un traitement thermique de la composition appliquée a été effectué à une température de 700°C pendant une durée de 3 heures sous atmosphère d'azote afin d'obtenir le revêtement.

Une seule couche de la composition a été appliquée pour constituer la protection de référence 2.

Les quantités de composition déposées pour la protection de référence 2 avant et après le traitement thermique sont indiquées dans le tableau 2 ci-dessous pour chacun des protocoles d'essais réalisés. Ces quantités de composition sont indiquées par unité de surface.

**Tableau 2**

| | **Protection de référence 2 « ◆ »** | |
|---|---|---|
| Protocoles d'essais | Quantité de composition liquide déposée avant traitement thermique | Quantité de composition déposée après traitement thermique |
| P650+ | 20,2mg/cm² | **13,5mg/cm²** |
| P850+ | 18,7mg/cm² | **12,5mg/cm²** |
| P1200+ | 18,7mg/cm² | **12,5mg/cm²** |
| P1400+ | 19,7mg/cm² | **13,2mg/cm²** |

Les revêtements obtenus pour la protection de référence 2 avaient une épaisseur d'environ 60 µm.

### Protection de référence 3 (hors invention)

Une troisième protection de référence (« protection de référence 3 ») a été réalisée en appliquant sur une pièce en composite C/C une suspension aqueuse comportant :
- une solution aqueuse à 50% massique en monophosphate d'aluminium en une teneur massique égale à 67%,
- une poudre de titane métal en une teneur massique égale à 11%,
- une poudre de B₄C en une teneur massique égale à 16,3%,
- de l'eau en une teneur massique égale à 4,7%, et
- 1% de Surfynol®.

Une première couche de cette composition a été appliquée puis un premier traitement thermique a été effectué à une température de 660°C pendant une durée de 1 heure sous atmosphère d'azote.

Une deuxième couche de cette composition a ensuite été appliquée sur le revêtement ainsi obtenu. Puis un deuxième traitement thermique a été effectué à une température de 660°C pendant une durée de 1 heure sous atmosphère d'azote.

On a ainsi obtenu un revêtement bi-couches à partir de la composition décrite plus haut.

Les quantités de composition déposées pour la protection de référence 3 sont indiquées dans le tableau 3 ci-dessous pour chacun des protocoles d'essais réalisés. Ces quantités de composition sont indiquées par unité de surface.

**Tableau 3**

| | **Protection de référence 3 « ■ »** | | | | |
|---|---|---|---|---|---|
| Protocoles d'essais | Quantité de composition liquide déposée avant traitement thermique (couche 1) | Quantité de composition déposée après traitement thermique (couche 1) | Quantité de composition liquide déposée avant traitement thermique (couche 2) | Quantité de composition déposée après traitement thermique (couche 2) | Composition de revêtement totale |
| P650+ | 16,7mg/cm² | 9mg/cm² | 17,2mg/cm² | 11,5mg/cm² | **20,5mg/cm²** |
| P850+ | 18,7mg/cm² | 10mg/cm² | 17,7mg/cm² | 11,8mg/cm² | **21,8mg/cm²** |
| P1200+ | 18,2mg/cm² | 9,8mg/cm² | 18,7mg/cm² | 12,5mg/cm² | **22,3mg/cm²** |
| P1400+ | 19,2mg/cm² | 10,5mg/cm² | 17,7mg/cm² | 11,8mg/cm² | **22,3mg/cm²** |

Les revêtements obtenus pour la protection de référence 3 avaient une épaisseur d'environ 100 µm.

### Protection selon l'invention

Un exemple de protection selon l'invention (« protection selon l'invention ») a été réalisé en appliquant sur une pièce en composite C/C une première composition de revêtement sous forme de suspension aqueuse, la première composition de revêtement comportait :
- une solution aqueuse à 50% massique en monophosphate d'aluminium en une teneur massique égale à 67%,
- une poudre de titane métal en une teneur massique égale à 11%,
- une poudre de B₄C en une teneur massique égale à 16,3%,
- de l'eau en une teneur massique égale à 4,7%, et
- 1% de Surfynol®.

Une première couche de cette première composition de revêtement a été appliquée puis un premier traitement thermique a été effectué à une température de 660°C pendant une durée de 1 heure sous atmosphère d'azote. Un premier revêtement a ainsi été obtenu.

On a ensuite appliqué sur le premier revêtement ainsi formé une deuxième composition de revêtement qui comportait :
- une suspension aqueuse de silice colloïdale en une teneur massique égale à 38%, la teneur massique en silice dans cette suspension était de 30%,
- une poudre de verre borosilicate « Pyrex® » en une teneur massique égale à 13%, et
- une poudre de TiB₂ en une teneur massique égale à 49%.

Un deuxième traitement thermique a alors été effectué à une température de 700°C pendant une durée de 3 heures sous atmosphère inerte. Un deuxième revêtement a ainsi été obtenu sur le premier revêtement.

Les quantités de composition déposées pour la protection selon l'invention sont indiquées dans le tableau 4 ci-dessous pour chacun des protocoles d'essais réalisés. Ces quantités de composition sont indiquées par unité de surface.

**Tableau 4**

| | **Protection selon l'invention « ▲ »** | | | | |
|---|---|---|---|---|---|
| Protocoles d'essais | Quantité de composition liquide déposée avant traitement thermique (couche 1) | Quantité de composition déposée après traitement thermique (couche 1) | Quantité de composition liquide déposée avant traitement thermique (couche 2) | Quantité de composition déposée après traitement thermique (couche 2) | Composition de revêtement totale |
| P650+ | 15,3mg/cm² | 8,2mg/cm² | 15,8mg/cm² | 10,6mg/cm² | **18,8mg/cm²** |
| P850+ | 17,2mg/cm² | 9,3mg/cm² | 20,2mg/cm² | 13,5mg/cm² | **22,8mg/cm²** |
| P1200+ | 17,7mg/cm² | 9,5mg/cm² | 17,2mg/cm² | 11,5mg/cm² | **21mg/cm²** |
| P1400+ | 16,7mg/cm² | 9mg/cm² | 20,2mg/cm² | 13,5mg/cm² | **22,5mg/cm ²** |

Les revêtements obtenus pour la protection selon l'invention avaient une épaisseur d'environ 100 µm.

Les résultats des essais obtenus pour les différents protocoles d'oxydation sont fournis aux figures 2 à 5. Sur chacune de ces figures :
- la protection de référence 1 est marquée par les points « ● »,
- la protection de référence 2 est marquée par les points « ◆ »,
- la protection de référence 3 est marquée par les points « ■ », et
- la protection selon l'invention est marquée par les points « ▲ ».

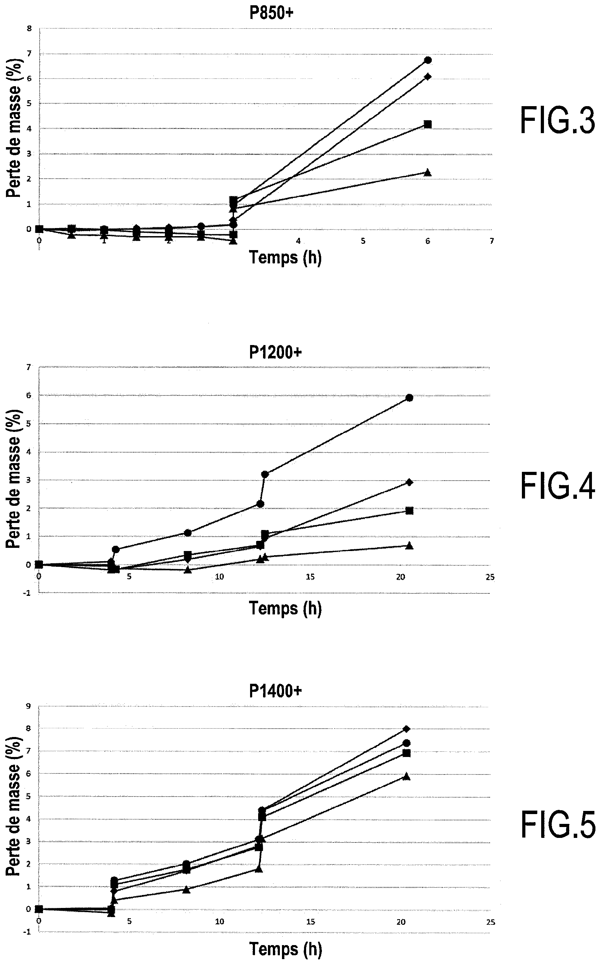

Les résultats des essais P650+ et P850+ (figures 2 et 3) montrent que la perte de masse est très inférieure pour la protection selon l'invention par rapport aux protections de référence 1 à 3. Ces essais démontrent que la protection selon l'invention fournit une meilleure protection contre l'oxydation en milieu humide par rapport aux protections de référence 1 à 3.

Les résultats des essais P1200+ et P1400+ (figures 4 et 5) montrent que la perte de masse est très inférieure pour la protection selon l'invention par rapport aux protections de référence 1 à 3. Ces essais démontrent que la protection selon l'invention fournit une meilleure protection contre l'oxydation à très haute température par rapport aux protections de référence 1 à 3.

Les inventeurs ont par ailleurs constaté qu'une protection de référence 4 consistant en deux couches superposées de la protection de référence 2 ne permettait pas d'améliorer la protection anti-oxydation dans la mesure où une telle solution conduit à un revêtement bi-couches ayant une adhérence limitée.

Un problème d'adhérence a aussi été rencontré lors des essais pour une protection de référence 5 consistant en un revêtement bi-couches « inversé » par rapport à la protection selon l'invention. Cette protection de référence 5 avait donc été formée d'abord par application de la deuxième composition de revêtement décrite plus haut, puis par application de la première composition de revêtement décrite plus haut.

En choisissant spécifiquement de combiner la première composition de revêtement à la deuxième composition de revêtement dans l'ordre indiqué dans l'invention, on obtient un revêtement d'épaisseur augmentée présentant une bonne adhérence et une excellente résistance à l'oxydation en milieu humide et à très haute température. Cette résistance à l'oxydation est en particulier significativement supérieure à celle présentée par un revêtement ayant aussi une épaisseur augmentée mais présentant une composition différente, où deux couches de première composition de revêtement ont été appliquées successivement (protection de référence 3 marquée par les points « ■ » sur les figures 2 à 5). La combinaison spécifique des première et deuxième compositions de revêtement selon l'invention fournit donc des performances anti-oxydation particulièrement élevées en milieu humide et à très haute température.

L'expression « compris(e) entre ... et ... » doit se comprendre comme incluant les bornes.

## Revendications

1. Procédé de protection contre l'oxydation d'une pièce en matériau composite comprenant du carbone, le procédé comportant au moins :
- l'application sur une surface externe de la pièce d'une première composition de revêtement sous forme de suspension aqueuse, la première composition de revêtement comportant :
- un phosphate métallique,
- une poudre d'un constituant comportant du titane, et
- une poudre de B₄C,
- un premier traitement thermique de la première composition de revêtement appliquée afin d'obtenir un premier revêtement sur la surface externe de la pièce,
- l'application sur le premier revêtement d'une deuxième composition de revêtement comportant :
- une suspension aqueuse de silice colloïdale,
- une poudre de verre borosilicate, et
- une poudre de TiB₂, et
- un deuxième traitement thermique de la deuxième composition de revêtement appliquée afin d'obtenir un deuxième revêtement sur le premier revêtement.

2. Procédé selon la revendication 1, dans lequel le constituant comportant du titane est le titane métal.

3. Procédé selon la revendication 1 ou 2, dans lequel le phosphate métallique est un phosphate d'aluminium.

4. Procédé selon l'une quelconque des revendications 1 à 3, dans lequel la première composition de revêtement comporte avant son application :
- le phosphate métallique en une teneur massique comprise entre 27 % et 36 %,
- la poudre du constituant comportant du titane en une teneur massique comprise entre 8 % et 18 %, et
- la poudre de B₄C en une teneur massique comprise entre 11,5 % et 21 %.

5. Procédé selon l'une quelconque des revendications 1 à 4, dans lequel une première température de traitement comprise entre 330°C et 740°C est imposée durant le premier traitement thermique.

6. Procédé selon l'une quelconque des revendications 1 à 5, dans lequel la suspension aqueuse de silice colloïdale est basique.

7. Procédé selon l'une quelconque des revendications 1 à 6, dans lequel la deuxième composition de revêtement comporte avant son application :
- la suspension aqueuse de silice colloïdale en une teneur massique comprise entre 25 % et 50 %, avec une teneur massique en silice dans cette suspension comprise entre 20% et 50%,
- la poudre de verre borosilicate en une teneur massique comprise entre 5 % et 20 %, et
- la poudre de TiB₂ en une teneur massique comprise entre 30 % et 60 %.

8. Procédé selon l'une quelconque des revendications 1 à 7, dans lequel une deuxième température de traitement comprise entre 600°C et 800°C est imposée durant le deuxième traitement thermique.

9. Procédé selon l'une quelconque des revendications 1 à 8, dans lequel au moins une couche de protection interne est formée, avant application de la première composition de revêtement, par imprégnation d'au moins une partie de la pièce en matériau composite par une composition d'imprégnation comportant un phosphate métallique.

10. Procédé selon l'une quelconque des revendications 1 à 9, dans lequel la pièce est une pièce de friction.

## Patentansprüche

1. Verfahren zum Schutz eines Kohlenstoff umfassenden Verbundwerkstoffteils vor Oxidation, wobei das Verfahren wenigstens umfasst:
- das Aufbringen einer ersten Beschichtungszusammensetzung in Form einer wässrigen Suspension auf eine Außenfläche des Teils, wobei die erste Beschichtungszusammensetzung umfasst:
- ein Metallphosphat,
- ein Pulver eines Bestandteils, der Titan enthält, und
- ein B₄C-Pulver,
- eine erste Wärmebehandlung der aufgebrachten ersten Beschichtungszusammensetzung, um eine erste Beschichtung auf der Außenfläche des Teils zu erhalten,
- das Aufbringen einer zweiten Beschichtungszusammensetzung auf die erste Beschichtung, umfassend:
- eine wässrige Suspension von kolloidalem Siliziumdioxid,
- ein Borosilikatglas-Pulver und
- TiB₂-Pulver, und
- eine zweite Wärmebehandlung der aufgebrachten zweiten Beschichtungszusammensetzung, um eine zweite Beschichtung auf der ersten Beschichtung zu erhalten.

2. Verfahren nach Anspruch 1, bei dem der Titan enthaltende Bestandteil Titanmetall ist.

3. Verfahren nach Anspruch 1 oder 2, bei dem das Metallphosphat ein Aluminiumphosphat ist.

4. Verfahren nach einem der Ansprüche 1 bis 3, bei dem die erste Beschichtungszusammensetzung vor ihrem Aufbringen umfasst:
- das Metallphosphat in einem Massengehalt im Bereich zwischen 27 % und 36 %,
- das Pulver des Titan enthaltenden Bestandteils in einem Massengehalt im Bereich zwischen 8 % und 18 %, und
- das B₄C-Pulver in einem Massengehalt im Bereich zwischen 11,5 % und 21 %.

5. Verfahren nach einem der Ansprüche 1 bis 4, bei dem während der ersten Wärmebehandlung eine erste Behandlungstemperatur im Bereich zwischen 330 °C und 740 °C auferlegt wird.

6. Verfahren nach einem der Ansprüche 1 bis 5, bei dem die wässrige Suspension von kolloidalem Siliziumdioxid basisch ist.

7. Verfahren nach einem der Ansprüche 1 bis 6, bei dem die zweite Beschichtungszusammensetzung vor ihrem Aufbringen umfasst:
- die wässrige Suspension von kolloidalem Siliziumdioxid in einem Massengehalt im Bereich zwischen 25 % und 50 %, wobei der Massengehalt an Siliziumdioxid in dieser Suspension im Bereich zwischen 20 % und 50 % liegt,
- das Borosilikatglas-Pulver in einem Massengehalt im Bereich zwischen 5 % und 20 %, und
- das TiB₂-Pulver in einem Massengehalt im Bereich zwischen 30 % und 60 %.

8. Verfahren nach einem der Ansprüche 1 bis 7, bei dem während der zweiten Wärmebehandlung eine zweite Behandlungstemperatur im Bereich zwischen 600 °C und 800 °C auferlegt wird.

9. Verfahren nach einem der Ansprüche 1 bis 8, bei dem vor dem Aufbringen der ersten Beschichtungszusammensetzung wenigstens eine innere Schutzschicht dadurch ausgebildet wird, dass wenigstens ein Teil des Verbundwerkstoffteils mit einer Imprägnierungszusammensetzung, welche ein Metallphosphat umfasst, imprägniert wird.

10. Verfahren nach einem der Ansprüche 1 bis 9, bei dem das Teil ein Reibungsteil ist.

## Claims

1. A method of protecting a carbon-containing composite material part against oxidation, the method comprising at least:
- applying a first coating composition in the form of an aqueous suspension on an outside surface of the part, the first coating composition comprising:
- a metallic phosphate;
- a powder of an ingredient comprising titanium; and
- a powder of B₄C;
- subjecting the applied first coating composition to heat treatment in order to obtain a first coating on the outside surface of the part;
- applying a second coating composition on the first coating composition, the second coating composition comprising:
- an aqueous suspension of colloidal silica;
- a powder of borosilicate glass; and
- a powder of TiB₂; and
- subjecting the applied second coating composition to second heat treatment in order to obtain a second coating on the first coating.

2. A method according to claim 1, wherein the ingredient comprising titanium is titanium metal.

3. A method according to claim 1 or to claim 2, wherein the metallic phosphate is an aluminum phosphate.

4. A method according to anyone of claims 1 to 3, wherein the first coating composition prior to application comprises:
- the metallic phosphate at a content by weight lying in the range 27% to 36%;
- the powder of the ingredient comprising titanium at a content by weight lying in the range 8% to 18%; and
- the powder of B₄C at a content by weight lying in the range 11.5% to 21%.

5. A method according to anyone of claims 1 to 4, wherein a first heat treatment temperature lying in the range 330°C to 740°C is imposed during the first heat treatment.

6. A method according to anyone of claims 1 to 5, wherein the aqueous suspension of colloidal silica is basic.

7. A method according to anyone of claims 1 to 6, wherein the second coating composition, prior to application, comprises:
- the aqueous suspension of colloidal silica at a content by weight lying in the range 25% to 50%, with a content by weight of silica in the suspension lying in the range 20% to 50%;
- the powder of borosilicate glass at a content by weight lying in the range 5% to 20%; and
- the powder of TiB₂ at a content by weight lying in the range 30% to 60%.

8. A method according to anyone of claims 1 to 7, wherein a second heat treatment temperature lying in the range 600°C to 800°C is imposed during the second heat treatment.

9. A method according to anyone of claims 1 to 8, wherein at least one internal protection layer is formed prior to applying the first coating composition by impregnating at least a portion of the composite material part with an impregnation composition comprising a metallic phosphate.

10. A method according to anyone of claims 1 to 9, wherein the part is a friction part.
